# FASCICULE DE BREVET EUROPEEN

(11) **EP 3 123 596 B1**
(45) Date de publication et mention de la délivrance du brevet: **25.05.2022**
(21) Numéro de dépôt: 15709723.9
(22) Date de dépôt: 20.02.2015
(51) Int. Cl.: H02K 3/52

(54) **DISPOSITIF ISOLANT D'UNE BOBINE DE ROTOR**
ISOLIERVORRICHTUNG FÜR EINE ROTORWINDE
INSULATING DEVICE OF A ROTOR WINDING

(30) Priorité: 28.03.2014 FR 1452687
(43) Date de publication de la demande: 01.02.2017
(73) Titulaire: Valeo Equipements Electriques Moteur, 94046 Créteil Cedex (FR)
(72) Inventeur: BALTHAZE, Patrice, 92310 Sèvres (FR); BILTERYST, Pierre-Yves, F-62170 Brimeux (FR); DELIANNE, Henri, F-62630 Maresville (FR); MARGUERITTE, David, F-62170 Wailly Beaucamp (FR); BOCQUEL, Michel, F-14390 Cabourg (FR)
(86) Numéro de dépôt international: PCT/FR2015/050421
(87) Numéro de publication internationale: WO 2015/145002

(56) Documents cités:
- FR-A1- 2 612 349
- US-A- 5 574 324
- US-A- 5 796 201
- US-A1- 2005 218 744
- US-A1- 2005 242 680
- US-A1- 2007 114 879
- US-A1- 2010 320 861

## Description

### DOMAINE DE L'INVENTION

La présente invention vise un dispositif isolant d'une bobine de rotor et un véhicule comportant un tel dispositif. L'invention s'applique notamment dans le domaine de l'automobile et plus particulièrement aux machines électriques tournantes tels des moteurs, alternateurs et alterno-démarreurs. Plus particulièrement, l'invention concerne l'assemblage des roues polaires pour un rotor de machine électrique équipé d'aimants permanents interpolaires.

### ÉTAT DE LA TECHNIQUE

Lors de l'assemblage ou du paquetage d'un moteur ou d'un alternateur utilisant le mécanisme des roues à dents, une bobine enroulée autour d'un isolant est insérée entre deux roues à aimants permanents créant le rotor. La bobine, l'isolant et les roues à dents sont des dispositifs coaxiaux. L'isolant doit être centré par rapport aux noyaux des roues polaires, et sa rotation par rapport aux roues polaires doit être bloquée. D'autre part, la bobine doit être bloquée en rotation autour de l'axe de l'isolant.

Dans l'état de la technique, ces fonctions étaient réalisées par des godrons. Cependant, la fabrication de pièces comportant des godrons est difficile à maîtriser. De plus, le dispositif comportant des godrons est difficile à assembler puisque les deux roues polaires sont guidées par des godrons. Aussi, les godrons sont de petite taille et leurs surfaces latérales empêchent la rotation de l'isolant par rapport aux roues polaires. Les surfaces latérales sont donc soumises à de grandes contraintes de cisaillement. D'autre part, l'utilisation de godrons empêche d'avoir une liberté d'une roue polaire par rapport à l'autre lors du paquetage.

Le documents FR 2612349 concerne une carcasse d'une bobine d'excitation d'un rotor comportant un moyeu tubulaire, deux joues, une pluralité de pétales s'étendant à partir des joues de manière à venir contre les griffes de la roue polaire et des protubérances ménagées sur les joues et formées de bourrelets disposés entre deux pétales consécutifs, les protubérances permettent de rattraper un jeu situé entre les joues et la surface interne des roues polaires.

Le document US 2005/0218744 décrit un rotor dans lequel un isolant permet d'isoler le bobinage central des dents de la roue polaire, l'isolant se présentant sous forme d'un anneau d'où s'étendent des pétales et des nervures de renfort.

Le document US 2010/320861 décrit un rotor à griffes qui permet de limiter le glissement de l'isolant lors de l'assemblage.

### OBJET DE L'INVENTION

La présente invention vise à remédier à tout ou partie de ces inconvénients.

À cet effet, selon un premier aspect, la présente invention vise un dispositif isolant d'une bobine de rotor comportant un dispositif de mise en position de l'isolant par rapport à une roue polaire comportant des dents et des interstices entre les dents qui comporte au moins deux pieds, sur une face de la bobine qui entre en contact avec une face de la roue polaire, les pieds ayant chacun au moins deux contacts distincts parmi les contacts suivant:
- contact sur une face latérale d'une dent,
- contact sur une face latérale d'une dent adjacente,

Dans des modes de réalisation, les pieds peuvent chacun avoir un contact distinct sur une face interstitielle entre une dent la dent adjacente.

Les contacts entre les pieds de l'isolant et les dents de la roue polaire assurent une fonction de centrage et d'anti-rotation de l'isolant par rapport aux dents de la roue polaire.

De plus, dans des modes de réalisation, la surface de contact peut être importante ce qui permet de répartir les efforts de cisaillement. Aussi lors de tests effectués sur le rotor, si la surface permettant l'anti-rotation est grande, les résultats seront améliorés.

Aussi les deux roues polaires constituant le rotor placés de part et d'autre de l'isolant sont indépendantes l'une de l'autre. L'isolant étant positionné par rapport à une des roues polaires, l'autre roue polaire peut être positionnée librement.

Selon l'invention, le dispositif comporte sur une face plane de l'isolant de bobine parallèle à la face comportant les pieds, au moins un ergot se déformant lors de la mise en position de l'isolant maintenant en position la bobine.

L'avantage de ces modes de réalisation est de permettre l'immobilisation de la bobine par rapport à l'isolant par déformation de l'isolant. De plus, les ergots permettent de limiter les vibrations. Le jeu entre l'isolant et la roue polaire ainsi que le jeu entre l'isolant et la bobine sont supprimés lors de la déformation de l'isolant.

Dans des modes de réalisation, le dispositif comporte, sur au moins une face plane de l'isolant de la bobine, au moins une ouverture traversante.

Un vernis est utilisé pour la tenue vibratoire de la bobine. Ces modes de réalisation présentent l'avantage de permettre une meilleure pénétration du vernis pour une meilleure imprégnation des couches supérieures de la bobine par le vernis.

De plus, lorsque les trous sont comblés de vernis, ils assurent une liaison mécanique, le vernis séché recouvre des couches supérieures de la bobine, l'isolant et une des roues polaires du rotor. Le vernis séché augmente la tenue à la vibration de la roue polaire et de l'isolant.

Dans des modes de réalisation, le dispositif objet de la présente invention comporte au moins un ergot sur la face intérieure du noyau de l'isolant.

Ces modes de réalisation présentent l'avantage de permettre un ajustement serré du noyau de l'isolant autour des noyaux des roues polaires.

Dans des modes de réalisation, la surface extérieure d'une dent du dispositif est en contact avec une dent d'une roue polaire complémentaire à la roue polaire.

Ces modes de réalisation présentent l'avantage d'assurer le maintien en position de la deuxième roue polaire et de diminuer le jeu résiduel.

Dans des modes de réalisation, les pieds sont répartis équitablement.

Une répartition équitable des pieds permet un maintien en position plus uniforme.

Dans des modes de réalisation, les ergots sont répartis équitablement.

L'avantage de ces modes de réalisation est de répartir uniformément la déformation plastique de l'isolant, et donc de permettre une immobilisation équilibrée de la bobine.

Dans des modes de réalisation, le dispositif objet de la présente invention comporte quatre pieds.

Ces modes de réalisation présentent l'avantage de permettre un grand nombre de contacts assurant un maintien en position. En outre, dans des modes de réalisation, un pied peut être en contact avec une surface latérale d'une dent et la face interstitielle et le pied adjacent peut être en contact avec une autre face interstitielle adjacente et l'autre face latérale de la même dent. Le maintien en position est bien assuré. Cependant les efforts de maintien en position sont concentrés sur une dent. Avec deux autres pieds sur le même principe, les efforts sont répartis.

Dans des modes de réalisation, le dispositif objet de la présente invention comporte au moins deux contacts avec une même face de la dent.

La surface de contact étant plus grande, les efforts de maintien en position sont plus répartis. De plus, s'il y a deux contacts parallèles sur la surface latérale, le centrage est plus précis.

Selon l'invention, l'isolant est en matière plastique.

L'avantage de ces modes de réalisation est d'avoir une déformation possible et d'être isolant.

Dans des modes de réalisation, au moins une dimension caractéristique d'une section de la base du pied est plus grande qu'au moins une dimension caractéristique correspondante d'une section du haut du pied.

Ces modes de réalisation présentent l'avantage de permettre une mise en position plus facile : les dimensions plus petites en haut du pied permettent une insertion de l'isolant entre les griffes plus aisée.

Dans des modes de réalisation, une dimension dite « largeur basse » d'une section à la base du pied et une dimension dite « largeur haute » d'une section du haut du pied sont des dimensions caractéristiques et sont parallèles au rayon de l'isolant.

L'avantage de ces modes de réalisation est de réaliser un chanfrein sur le haut de la face extérieure du pied, par exemple, qui guide l'emboitement de la deuxième roue polaire.

Dans des modes de réalisation, une dimension dite « longueur haute » d'une section à la base du pied et une dimension dite « longueur basse » d'une section du haut du pied sont des dimensions caractéristiques et sont orthogonales au rayon de l'isolant.

Ces modes de réalisation présentent l'avantage de limiter la taille du haut du pied pour permettre une insertion plus aisée de l'isolant entre les dents.

Dans des modes de réalisation, la roue polaire est obtenue par forgeage.

Ces modes de réalisation présentent l'avantage d'avoir un procédé de fabrication simple. Ce procédé de fabrication simple à mettre en œuvre permet d'obtenir des taux de rebuts également appelé taux de scrap selon un terme anglo-saxon bien connu de l'homme du métier plus faibles.

Dans des modes de réalisation, le procédé de forgeage de la roue polaire comporte une étape de forgeage à chaud et une étape de forgeage à froid.

L'avantage de ces modes de réalisation est de réduire la durée de fabrication ainsi que de simplifier le procédé de fabrication. De plus, la forme de l'isolant de bobine étant moins contrainte, il est possible d'utiliser un procédé de forgeage pour la réalisation des roues polaires.

Selon un deuxième aspect, la présente invention vise un véhicule comportant un rotor comportant un dispositif objet de la présente invention.

Le véhicule est ainsi assemblé plus rapidement.

### BRÈVE DESCRIPTION DES FIGURES

D'autres avantages, buts et caractéristiques de l'invention ressortiront de la description non-limitative qui suit d'au moins un mode de réalisation particulier du dispositif isolant d'une bobine de rotor et du véhicule comportant un tel dispositif, en regard des dessins annexés, dans lesquels :
- la figure 1 représente, schématiquement et en plan, une vue de dessus d'un mode de réalisation particulier du dispositif objet de la présente invention,
- la figure 2 représente, schématiquement et en plan, une vue de dessous d'un mode de réalisation particulier du dispositif objet de la présente invention,
- la figure 3 représente, schématiquement et en coupe, un mode de réalisation particulier du dispositif objet de la présente invention,
- la figure 4 représente, schématiquement et en coupe, un mode de réalisation particulier du dispositif objet de la présente invention,
- la figure 5 représente, schématiquement et en coupe, un mode de réalisation particulier du dispositif objet de la présente invention,
- la figure 6 représente, schématiquement et en coupe, un mode de réalisation particulier du dispositif objet de la présente invention et
- la figure 7 représente, schématiquement et en vue de côté, un mode de réalisation particulier du véhicule objet de la présente invention.

### DESCRIPTION DE MODES DE RÉALISATION DE L'INVENTION

On note, dès à présent, que les figures ne sont pas à l'échelle.

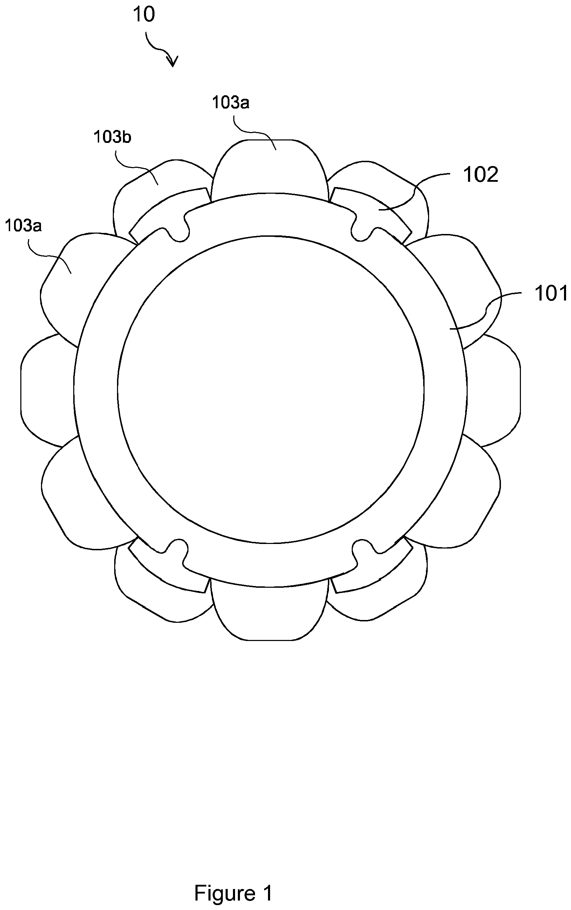

On observe sur la figure 1, une vue de dessus d'un mode de réalisation d'un dispositif 10 isolant d'une bobine de rotor comportant un dispositif de mise en position de l'isolant par rapport à une roue polaire comportant des dents et des interstices entre les dents qui comporte au moins deux pieds 102, sur une face 101 de l'isolant qui entre en contact avec une face de la roue polaire. Préférentiellement le dispositif 10 est en matière plastique. Le dispositif 10 comprend en outre une pluralité de pétales 103a, 103b repliés de manière à être chacun en contact avec une surface interne d'une dent du rotor. Des pétales 103a sont disposés le long d'une des roues polaires et des pétales 103b sont disposés le long de l'autre roue polaire. Dans des modes de réalisation, un pied 102 est positionné entre deux pétales 103a consécutifs disposés le long d'une même roue polaire.

La dent peut être en saillie par rapport à la face 101 de l'isolant. Dans des modes de réalisation, la face 101 est circulaire et le bas du pied 102 est en saillie par rapport au cercle extérieur de la face 101. Le nombre de pieds 102 peut être de quatre. Préférentiellement, les pieds 102 sont répartis équitablement.

Dans des modes de réalisation, deux pieds 102 sont sur la face 101. Dans des modes de réalisation, le nombre de pieds 102 est égal au nombre d'interstices entre les dents de la roue polaire. Dans des modes de réalisation, les pieds 102 sont répartis de façon symétrique.

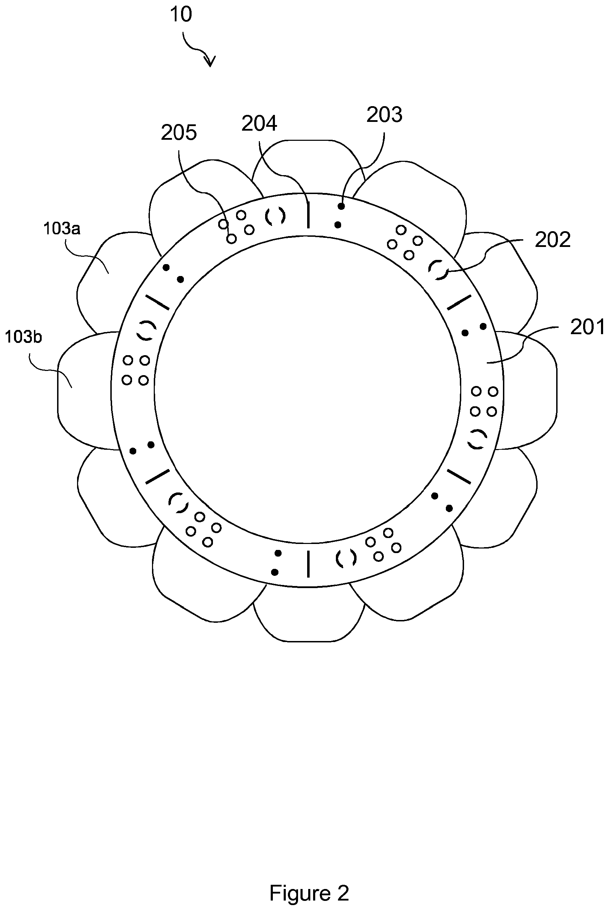

On observe sur la figure 2, une vue de dessous d'un mode de réalisation d'un isolant 10. Une face 201, préférentiellement parallèle à la face 101, comporte des ergots 202, 203 et 204. La face 201 est préférentiellement circulaire.

Les ergots 202 sont préférentiellement des arcs de cercle en saillie par rapport à la face 201. Les ergots 202 peuvent se situer autour d'un percement réalisé dans la face 201, par exemple.

Les ergots 203 sont préférentiellement des reliefs circulaires en saillie par rapport à la face 201. Plusieurs ergots 203 peuvent être alignés radialement.

Les ergots 204 sont préférentiellement des reliefs linéaires en saillie par rapport à la face 201. Les ergots 201 peuvent être rectilignes et orientés de manière à être colinéaires avec un rayon de la face 201.

Les ergots 202, 203, 204 peuvent :
- comporter un chanfrein,
- être répartis équitablement,
- être configurés pour déformer l'isolant lors du paquetage et donc maintenir la bobine en position.

Un seul type d'ergots parmi les ergots 202, 203 et 204 peut être mis en place sur l'isolant 10. Inversement, plusieurs ergots de types différents parmi les ergots 202, 203 et 204 peuvent être mis en place simultanément.

Dans des modes de réalisation des ergots 202, 203 et 204 sont situés sur la face intérieure du noyau de l'isolant 10.

Dans des modes de réalisation des ergots peuvent avoir une forme carrée, circulaire, conique, triangulaire ou tout autre forme dont la surface ne dépasse pas de la surface de la face sur laquelle l'ergot est situé.

La face 201 peut comporter au moins une ouverture traversante 205. L'ouverture traversante 205 est préférentiellement circulaire d'un diamètre entre 3 millimètres et 6 millimètres. Dans des modes de réalisation, des ouvertures peuvent avoir une forme carrée, circulaire, conique, triangulaire ou tout autre forme donc la surface ne dépasse pas de la surface de la face sur laquelle l'ergot est situé.

Préférentiellement, les ouvertures 205 sont réparties équitablement. L'ouverture peut être configurée pour laisser s'écouler du vernis. La surface de l'ouverture peut dépendre de la viscosité du vernis. Préférentiellement, la surface de l'ouverture est supérieure à 1 millimètre carré.

La face 101 peut comporter des ouvertures 205. Les ouvertures 205 de la face 101 peuvent correspondre aux ouvertures 205 de la face 201.

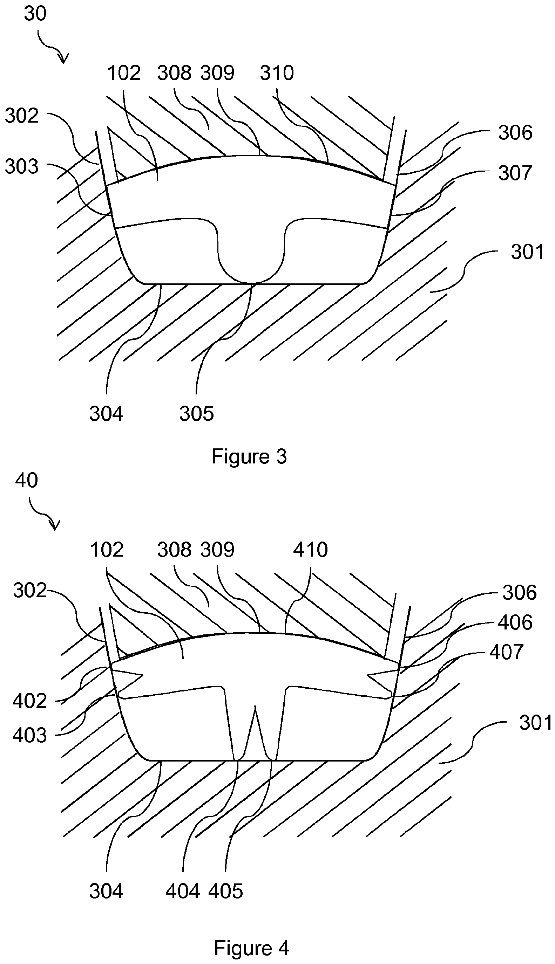

On observe sur la figure 3, une coupe d'un mode de réalisation particulier 30 d'un pied 102 du dispositif 10, objet de la présente invention.

Le pied 102 peut être inséré dans l'interstice entre les dents adjacentes d'une roue polaire 301. Le pied 102 peut entrer en contact avec trois faces caractérisant deux dents adjacentes d'une roue polaire et l'interstice entre ces dents :
- une face 302 sur le côté d'une dent,
- une face 304 interstitielle entre les dents proche de la base de la roue polaire et
- une face 306 sur le côté d'une dent adjacente.

Les faces 302, 304 et 306 peuvent faire partie d'une même courbe.

Lors du paquetage, une face intérieure 309 d'une dent de la deuxième roue polaire 308 peut être en contact avec une face extérieure du pied 102.

Le pied 102 peut avoir:
- un contact 303 avec la face 302 de la roue polaire 301,
- un contact 305 avec la face 304 de la roue polaire 301,
- un contact 307 avec la face 306 de la roue polaire 301 et
- un contact 310 avec la face 309 de la roue polaire 308.

Les contacts 303, 305, 307 et 310 peuvent être ponctuels, linéaires ou planaires. Les contacts 303, 307 et 310 sont préférentiellement planaires. Le contact 305 est préférentiellement linéaire.

La forme de la face extérieure du pied 102 a préférentiellement un profil complémentaire au profile de la dent 308.

Le profile du pied 102 du mode de réalisation 30 peut être dit profil en « T avec un point de contact ». Préférentiellement, le pied 102 assure le centrage.

On observe sur la figure 4, une coupe d'un mode de réalisation particulier 40 d'un pied 102 du dispositif 10, objet de la présente invention.

Le pied 102 peut être inséré dans l'interstice entre les dents adjacentes d'une roue polaire 301. Le pied 102 peut entrer en contact avec trois faces caractérisant deux dents adjacentes d'une roue polaire et l'interstice entre ces dents :
- une face 302 sur le côté d'une dent,
- une face 304 interstitielle entre les dents proche de la base de la roue polaire et
- une face 306 sur le côté d'une dent adjacente.

Les faces 302, 304 et 306 peuvent faire partie d'une même courbe.

Lors du paquetage, une face intérieure 309 d'une dent de la deuxième roue polaire 308 peut être en contact avec une face extérieure du pied 102.

Le pied 102 peut avoir:
- deux contacts 402 et 403 avec la face 302 de la roue polaire 301,
- deux contacts 404 et 405 avec la face 304 de la roue polaire 301,
- deux contacts 406 et 407 avec la face 306 de la roue polaire 301 et
- un contact 410 avec la face 309 de la roue polaire 308.

Les contacts 402, 403, 404, 405, 406, 407 et 410 peuvent être ponctuels, linéaires ou planaires. Les contacts 402, 403, 404, 405, 406, 407 et 410 sont préférentiellement linaires.

La forme de la face extérieure du pied 102 a préférentiellement un profil complémentaire au profile de la dent 308.

Le profile du pied 102 du mode de réalisation 40 peut être dit profil en « T avec deux points de contact ». Préférentiellement, le pied 102 assure le centrage et l'anti-rotation de l'isolant par rapport à la roue polaire.

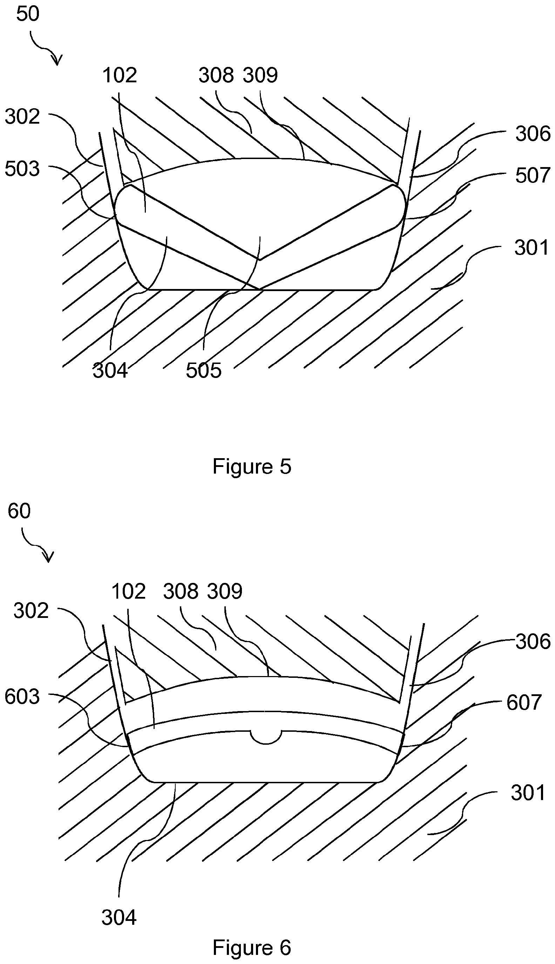

On observe sur la figure 5, une coupe d'un mode de réalisation particulier 50 d'un pied 102 du dispositif 10, objet de la présente invention.

Le pied 102 peut être inséré dans l'interstice entre les dents adjacentes d'une roue polaire 301. Le pied 102 peut entrer en contact avec trois faces caractérisant deux dents adjacentes d'une roue polaire et l'interstice entre ces dents :
- une face 302 sur le côté d'une dent,
- une face 304 interstitielle entre les dents proche de la base de la roue polaire et
- une face 306 sur le côté d'une dent adjacente.

Les faces 302, 304 et 306 peuvent faire partie d'une même courbe.

Lors du paquetage, une face intérieure 309 d'une dent de la deuxième roue polaire 308 n'entre préférentiellement pas en contact avec le pied 102.

Le pied 102 peut avoir:
- un contact 503 avec la face 302 de la roue polaire 301,
- un contact 505 avec la face 304 de la roue polaire 301 et
- un contact 507 avec la face 306 de la roue polaire 301.

Les contacts 503, 505, 507 peuvent être ponctuels, linéaires ou planaires. Les contacts 503, 505, 507 sont préférentiellement linaires.

La forme de la face extérieure du pied 102 a préférentiellement un profil concave pour ne pas entrer en contact avec la face 309 de la roue polaire 308.

Le profile du pied 102 du mode de réalisation 50 peut être dit profil en « V ». Préférentiellement, le pied 102 assure le centrage et l'anti-rotation de l'isolant par rapport à la roue polaire.

On observe sur la figure 6, une coupe d'un mode de réalisation particulier 60 d'un pied 102 du dispositif 10, objet de la présente invention.

Le pied 102 peut être inséré dans l'interstice entre les dents adjacentes d'une roue polaire 301. Le pied 102 peut entrer en contact avec trois faces caractérisant deux dents adjacentes d'une roue polaire et l'interstice entre ces dents :
- une face 302 sur le côté d'une dent,
- une face 304 interstitielle entre les dents proche de la base de la roue polaire et
- une face 306 sur le côté d'une dent adjacente.

Les faces 302, 304 et 306 peuvent faire partie d'une même courbe.

Lors du paquetage, une face intérieure 309 d'une dent de la deuxième roue polaire 308 n'entre préférentiellement pas en contact avec le pied 102.

Le pied 102 peut avoir:
- un contact 603 avec la face 302 de la roue polaire 301 et
- un contact 607 avec la face 306 de la roue polaire 301.

Les contacts 603, 607 peuvent être ponctuels, linéaires ou planaires. Les contacts 603, 607 sont préférentiellement planaires.

Le profile du pied 102 du mode de réalisation 60 peut être dit profil en « profile plat ». Préférentiellement, le pied 102 assure l'anti-rotation de l'isolant par rapport à la roue polaire.

Dans des modes de réalisation, tous les pieds 102 de l'isolant sont les mêmes. Dans d'autres modes de réalisation, plusieurs modes de réalisation différents parmi les modes de réalisation 30, 40 ,50 et 60 sont utilisés.

Dans des modes de réalisation le pied 102 est en « L », c'est à dire qu'il entre en contact avec la face 305 de la roue polaire 301 et avec l'une des faces 303 ou 307 de la roue polaire 301.

Dans des modes de réalisation, une section de la base du pied est plus grande qu'au moins une dimension caractéristique correspondante d'une section du haut du pied. La dimension caractéristique peut être :
- la largeur, soit une dimension parallèle au rayon de l'isolant,
- la longueur, soit une dimension perpendiculaire au rayon de l'isolant.

Pour le pied 102 du mode de réalisation 30 la largeur peut être la distance entre le point de contact 305 et le point sur la face extérieure du pied suivant une normale au point de contact 305. La longueur peut être la distance entre l'arête d'intersection entre la face extérieure et la face de contact 303 du pied et l'arête d'intersection entre la face extérieure et la face de contact 307 du pied.

Pour le pied 102 du mode de réalisation 40 la largeur peut être la distance le milieu du segment entre les arêtes de contact 404 et 405 et le point sur la face extérieure du pied suivant une normale au segment définit. La longueur peut être la distance entre l'arête d'intersection entre la face extérieure et la face de contact 402 du pied et l'arête d'intersection entre la face extérieure et la face de contact 406 du pied.

Pour le pied 102 du mode de réalisation 50 la largeur peut être la distance entre le point de contact 505 et le point sur la face extérieure du pied suivant une normale au point de contact 505. La longueur peut être la distance entre l'arête de contact 503 du pied 102 et l'arête 507 de contact du pied 102-3.

Pour le pied 102 du mode de réalisation 60 la largeur peut être la plus grande distance entre la face intérieure du pied et la face extérieure du pied suivant une normale à la face extérieure. La longueur peut être la distance entre l'arête d'intersection entre la face extérieure et la face de contact 603 du pied et l'arête d'intersection entre la face extérieure et la face de contact 607 du pied.

Les modes de réalisation des pieds 102 cités précédemment sont préférentiellement ajustés serré à la base du pied.

Dans des modes de réalisation, les roues polaires 301 et 308 sont obtenues par forgeage. Le procédé de forgeage peut comprendre une étape de forgeage à chaud et une étape de forgeage à froid. Préférentiellement, ces étapes interviennent dans l'ordre cité précédemment.

L'étape de forgeage à froid peut comporter deux étapes de matriçage correspondant à deux frappes sur la roue polaire. La deuxième frappe rend la pièce plus précise. Les étapes de matriçage sont préférentiellement suivies d'étapes de découpe des refoulements de matière entrainés par les frappes.

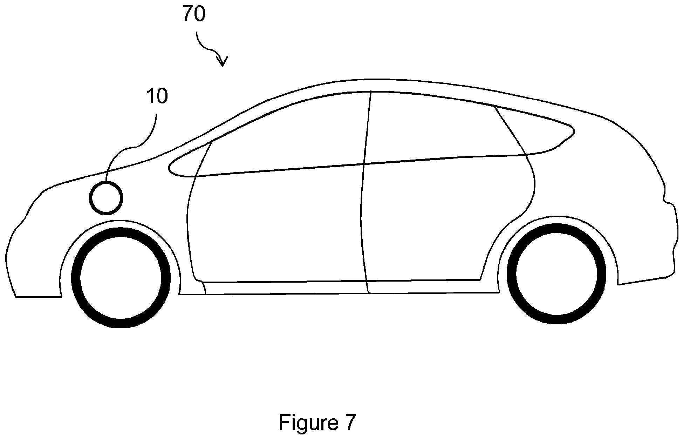

On observe sur la figure 7, un mode de réalisation particulier d'un véhicule 20 objet de la présente invention.

Le véhicule 20 peut comporter une machine électrique tournante tel un moteur, un alternateur ou un alterno-démarreur qui comporte un rotor à griffes dont la bobine est isolée par un dispositif 10 objet de la présente invention.

## Revendications

1. Rotor à griffes de machine électrique tournante comprenant :
- deux roues polaires (310, 308), chacune des roues comportant des dents et des interstices entre les dents,
- une bobine,
- un dispositif isolant (10) de la bobine comportant un dispositif de mise en position de l'isolant par rapport aux roues polaires (310, 308),
le dispositif isolant (10) comportant au moins deux pieds (102), sur une face (101) de l'isolant qui entre en contact avec une face d'une des deux roues polaires (301, 308), les pieds ayant chacun au moins les deux contacts distincts suivants :
- contact sur une face latérale (302) sur le côté d'une dent d'une roue,
- contact sur une face latérale (306) sur le côté d'une dent adjacente de ladite roue polaire,
de manière à assurer une fonction de centrage et d'anti-rotation de l'isolant par rapport aux dents de la roue polaire,
le rotor à griffes étant **caractérisé en ce que** le dispositif isolant (10) comporte sur une face plane (201) de l'isolant de bobine parallèle à la face (101) comportant les pieds (102), au moins un ergot (202, 203 ou 204) se déformant lors de la mise en position de l'isolant maintenant en position la bobine, et
**en ce que** l'isolant du dispositif isolant est en matière plastique.

2. Rotor selon la revendication 1, dans lequel le dispositif isolant (10) comporte, sur au moins une face plane (101 ou 201) de l'isolant de la bobine, au moins une ouverture traversante (205).

3. Rotor selon la revendication 1 ou 2, dans lequel le dispositif isolant (10) comporte au moins un ergot (202, 203 ou 204) sur la face intérieure du noyau de l'isolant.

4. Rotor selon l'une des revendications 1 à 3, dans lequel la surface extérieure d'un pied (102) du dispositif isolant (10) est en contact avec une dent d'une roue polaire (308) complémentaire à la roue polaire (301).

5. Rotor selon l'une des revendications 1 à 4, dont les pieds (102) du dispositif isolant (10) sont répartis équitablement.

6. Rotor selon l'une des revendications 1 à 5, dont les ergots (202, 203 ou 204) du dispositif isolant (10) sont répartis équitablement.

7. Rotor selon l'une des revendications 1 à 6, dans lequel le dispositif isolant (10) comporte quatre pieds (102).

8. Rotor selon l'une des revendications 1 à 7, dans lequel le dispositif isolant (10) comporte au moins deux contacts avec une même face de la dent.

9. Rotor selon l'une des revendications 1 à 8, dont au moins une dimension caractéristique d'une section de la base du pied (102) du dispositif isolant (10) est plus grande qu'au moins une dimension caractéristique correspondante d'une section du haut du pied.

10. Rotor selon la revendication 9, dont une dimension dite « largeur basse » d'une section à la base du pied (102) et une dimension dite « largeur haute » d'une section du haut du pied du dispositif isolant (10) sont des dimensions caractéristiques et sont parallèles au rayon de l'isolant.

11. Rotor selon l'une des revendications 9 ou 10, dont une dimension dite « longueur haute » d'une section à la base du pied (102) et une dimension dite « longueur basse » d'une section du haut du pied du dispositif isolant (10) sont des dimensions caractéristiques et sont orthogonales au rayon de l'isolant.

12. Rotor selon l'une des revendications 1 à 11, dont au moins une roue polaire (301 ou 308) est obtenue par forgeage.

13. Rotor selon la revendication 12, dont le procédé de forgeage de la roue polaire (301 ou 308) comporte une étape de forgeage à chaud et une étape de forgeage à froid.

14. Véhicule (70) comportant un rotor selon la revendication 1.

## Patentansprüche

1. Klauenrotor einer elektrischen Rotationsmaschine, umfassend:
- zwei Polräder (301, 308), wobei jedes der Räder Zähne und Zwischenräume zwischen den Zähnen aufweist,
- eine Spule,
- eine Vorrichtung (10) zum Isolieren der Spule, die eine Vorrichtung zum Positionieren der Isolierung in Bezug auf die Polräder (301, 308) aufweist,
wobei die Isolationsvorrichtung (10) mindestens zwei Füße (102) auf einer Seite (101) der Isolierung aufweist, die mit einer Seite eines der beiden Polräder (301, 308) in Kontakt steht, wobei die Füße jeweils zumindest die folgenden zwei unterschiedlichen Kontakte aufweisen:
- Kontakt auf einer Seitenfläche (302) auf der Seite eines Zahns eines Rads,
- Kontakt auf einer Seitenfläche (306) auf der Seite eines benachbarten Zahns des Polrads,
so dass eine zentrierende und rotationshemmende Funktion der Isolierung in Bezug auf die Zähne des Polrads gewährleistet ist,
wobei der Klauenrotor **dadurch gekennzeichnet ist, dass** die Isolationsvorrichtung (10) auf einer ebenen Fläche (201) der Spulenisolierung, die zur Fläche (101) mit den Füßen (102) parallel ist, zumindest einen Vorsprung (202, 203 oder 204) aufweist, der sich bei der Positionierung der Isolierung verformt und die Spule in Position hält, und
dass die Isolierung der Isolationsvorrichtung aus Kunststoff besteht.

2. Rotor nach Anspruch 1, wobei die Isolationsvorrichtung (10) auf mindestens einer ebenen Fläche (101 oder 201) der Spulenisolierung mindestens eine Durchgangsöffnung (205) aufweist.

3. Rotor nach Anspruch 1 oder 2, wobei die Isolationsvorrichtung (10) auf der Innenfläche des Isolierkerns mindestens einen Vorsprung (202, 203 oder 204) aufweist.

4. Rotor nach einem der Ansprüche 1 bis 3, wobei die Außenfläche eines Fußes (102) der Isolationsvorrichtung (10) mit einem Zahn eines zum Polrad (301) komplementären Polrads (308) in Kontakt steht.

5. Rotor nach einem der Ansprüche 1 bis 4, wobei die Füße (102) der Isolationsvorrichtung (10) gleichmäßig verteilt sind.

6. Rotor nach einem der Ansprüche 1 bis 5, wobei die Vorsprünge (202, 203 oder 204) der Isolationsvorrichtung (10) gleichmäßig verteilt sind.

7. Rotor nach einem der Ansprüche 1 bis 6, wobei die Isolationsvorrichtung (10) vier Füße (102) aufweist.

8. Rotor nach einem der Ansprüche 1 bis 7, wobei die Isolationsvorrichtung (10) mindestens zwei Kontakte mit derselben Zahnfläche aufweist.

9. Rotor nach einem der Ansprüche 1 bis 8, wobei mindestens eine charakteristische Abmessung eines Abschnitts an der Basis des Fußes (102) der Isolationsvorrichtung (10) größer als mindestens eine entsprechende charakteristische Abmessung eines Abschnitts am oberen Teil des Fußes ist.

10. Rotor nach Anspruch 9, wobei eine als "untere Breite" bezeichnete Abmessung eines Abschnitts an der Basis des Fußes (102) und eine als "obere Breite" bezeichnete Abmessung eines Abschnitts am oberen Teil des Fußes der Isolationsvorrichtung (10) charakteristische Abmessungen sind und parallel zum Radius der Isolierung verlaufen.

11. Rotor nach einem der Ansprüche 9 oder 10, wobei eine als "obere Länge" bezeichnete Abmessung eines Abschnitts an der Basis des Fußes (102) und eine als "untere Länge" bezeichnete Abmessung eines Abschnitts am oberen Teil des Fußes der Isolationsvorrichtung (10) charakteristische Abmessungen sind und senkrecht zum Radius der Isolierung verlaufen.

12. Rotor nach einem der Ansprüche 1 bis 11, wobei mindestens ein Polrad (301 oder 308) durch Schmieden erhalten wird.

13. Rotor nach Anspruch 12, wobei das Verfahren zum Schmieden des Polrads (301 oder 308) einen Schritt des Warmschmiedens und einen Schritt des Kaltschmiedens umfasst.

14. Fahrzeug (70) mit einem Rotor nach Anspruch 1.

## Claims

1. Claw-pole rotor of a rotating electric machine, comprising:
- two pole wheels (301, 308), each of the wheels comprising teeth and interstices between the teeth,
- a coil,
- an insulating device (10) of the coil comprising a device for positioning the insulator with respect to the pole wheels (301, 308),
the insulating device (10) comprising at least two feet (102) on a face (101) of the insulator that contacts a face of one of the two pole wheels (301, 308), each of the feet having at least the two separate contacts below:
- contact on a lateral face (302) on the side of a tooth of a wheel,
- contact on a lateral face (306) on the side of an adjacent tooth of said pole wheel,
so as to provide a centring and anti-rotation function for the insulator with respect to the teeth of the pole wheel,
the claw-pole rotor being **characterized in that**
the insulating device (10) comprises, on a flat face (201) of the coil insulator parallel to the face (101) comprising the feet (102), at least one lug (202, 203 or 204) which deforms during the positioning of the insulator while keeping the coil in position, and
**in that** the insulator of the insulating device is made of plastic.

2. Rotor according to Claim 1, wherein the insulating device (10) comprises at least one through-opening (205) on at least one flat face (101 or 201) of the insulator of the coil.

3. Rotor according to Claim 1 or 2, wherein the insulating device (10) comprises at least one lug (202, 203 or 204) on the inner face of the core of the insulator.

4. Rotor according to one of Claims 1 to 3, wherein the outer surface of a foot (102) of the insulating device (10) is in contact with a tooth of a pole wheel (308) complementary to the pole wheel (301).

5. Rotor according to one of Claims 1 to 4, of which the feet (102) of the insulating device (10) are distributed evenly.

6. Rotor according to one of Claims 1 to 5, of which the lugs (202, 203 or 204) of the insulating device (10) are distributed evenly.

7. Rotor according to one of Claims 1 to 6, wherein the insulating device (10) comprises four feet (102).

8. Rotor according to one of Claims 1 to 7, wherein the insulating device (10) comprises at least two contacts with one and the same face of the tooth.

9. Rotor according to one of Claims 1 to 8, of which at least one characteristic dimension of a section of the bottom of the foot (102) of the insulating device (10) is greater than at least one corresponding characteristic dimension of a section of the top of the foot.

10. Rotor according to Claim 9, of which a dimension referred to as "lower width" of a section at the bottom of the foot (102) and a dimension referred to as "upper width" of a section of the top of the foot of the insulating device (10) are the characteristic dimensions and are parallel to the radius of the insulator.

11. Rotor according to either of Claims 9 and 10, of which a dimension referred to as "upper length" of a section at the bottom of the foot (102) and a dimension referred to as "lower length" of a section of the top of the foot of the insulating device (10) are the characteristic dimensions and are orthogonal to the radius of the insulator.

12. Rotor according to one of Claims 1 to 11, of which at least one pole wheel (301 or 308) is obtained by forging.

13. Rotor according to Claim 12, of which the process for forging the pole wheel (301 or 308) comprises a hot forging step and a cold forging step.

14. Vehicle (70) comprising a rotor according to Claim 1.
